# EUROPEAN PATENT SPECIFICATION

(11) **EP 3 633 778 B1**
(45) Date of publication and mention of the grant of the patent: **25.12.2024**
(21) Application number: 18805611.3
(22) Date of filing: 23.05.2018
(51) Int. Cl.: H01M 8/04014, H01M 8/0432, H01M 8/04746, H01M 8/0612, H01M 8/0662, H01M 8/04225, H01M 8/04664, H01M 8/04228, H01M 8/04007, H01M 8/04223, H01M 8/04082, H01M 8/04302, H01M 8/04303

(54) **FUEL CELL SYSTEM**
BRENNSTOFFZELLENSYSTEM
SYSTÈME DE PILE À COMBUSTIBLE

(30) Priority: 23.05.2017 KR 20170063654
(43) Date of publication of application: 08.04.2020
(73) Proprietor: MICO POWER LTD, Gyeonggi-do 17567 (KR)
(72) Inventor: LEE, Jun Woo, Anseong-si Gyeonggi-do 17564 (KR); CHOI, Song Ho, Anseong-si Gyeonggi-do 17550 (KR)
(74) Representative: Laine IP Oy
(86) International application number: PCT/KR2018/005833
(87) International publication number: WO 2018/217005

(56) References cited:
- JP-A- 2011 054 515
- JP-A- 2013 196 819
- JP-A- 2015 220 020
- KR-A- 20100 083 027
- KR-B1- 100 587 518
- KR-B1- 100 774 574
- US-A1- 2008 248 342
- US-A1- 2011 159 386
- US-A1- 2015 137 044

## Description

### TECHNICAL FIELD

The present disclosure relates to a fuel cell system, and more specifically to a fuel cell system operating at high temperatures.

### BACKGROUND ART

A fuel cell that generates electricity via an electrochemical reaction of hydrogen and oxygen has a simple energy conversion step and realizes an eco-friendly high efficiency and pollution-free generator and thus has been actively researched recently.

In particular, a solid oxide fuel cell (SOFC) operates at a high temperature of about 600 to 1000 °C using ceramic as an electrolyte. The SOFC may be more efficient and have low pollution level compared to various other types of fuel cells, such as molten carbonate fuel-cell (MCFC), phosphoric acid fuel-cell (PAFC), and polymer electrolyte membrane fuel cell (PEMFC) and does not require a fuel reformer and realizes combined power generation.

However, the high-temperature fuel-cell system such as a solid oxide fuel-cell has an operating temperature reaching about 600 to 1000 °C. Thus, initially, system components such as a fuel-cell stack, a reformer, etc. must be heated to a temperature at which the electrical energy may be generated. Further, techniques for controlling the temperature of the system is required for stable operation of the fuel-cell system and improvement of system durability.

The above mentioned technology has been discussed in JP 2013 196819, US 2011/159386, US 2008/248342, US 2015/137044 and JP 2015 220020.

### DISCLOSURE

### TECHNICAL PURPOSES

A purpose of the present disclosure is to provide a fuel cell system in which a time duration from a start-up mode of the fuel-cell stack to a power generation mode thereof may be reduced and a temperature of the system may be stably lowered in an abnormal overheated state or when the fuel cell stack stops.

### TECHNICAL SOLUTIONS

The present invention provides a fuel-cell system including: a fuel-cell stack structure including one or more fuel-cell stacks; and a reformer for converting at least a portion of hydrocarbon fuel to hydrogen and supplying the hydrogen to the fuel-cell stack structure, the fuel-cell system being characterized in that the fuel-cell system further includes: a first heat exchanger coupled to a first air supply pipe for connecting an external air supply and the fuel-cell stack structure, wherein the first heat exchanger is configured for heating air supplied from the air supply via heat exchange and for supplying the heated air to the fuel-cell stack structure; a first heater installed on a second air supply pipe for connecting the air supply and the fuel-cell stack structure, wherein the first heater is configured for heating air to be supplied to the fuel-cell stack via the second air supply pipe; and a controller configured for: when a temperature of the fuel-cell stack structure is lower than a predefined first temperature, activating the first heater to heat air and supply the heated air the fuel-cell stack structure; and when the temperature of the fuel-cell stack structure is above the first temperature and below a predetermined second temperature higher than the first temperature, activating the first heat exchanger to heat air and supply the heated air the fuel-cell stack structure.

In one implementation, the fuel-cell system further includes a burner for combusting unreacted fuel and air discharged from the fuel-cell stack structure, wherein the first heat exchanger is configured to heat the air using hot combusted gas supplied from the burner.

In one implementation, the fuel-cell system further includes a second heat exchanger configured to receive the hot combusted gas from the first heat exchanger and to heat the hydrocarbon fuel supplied from an external fuel supply via heat exchange with the hot combusted gas and to supply the heated fuel to the reformer.

In one implementation, the second heat exchanger includes a vaporizer for converting water into steam via heat exchange with the combusted gas, wherein the second heat exchanger is configured for supplying the heated hydrocarbon fuel and the steam produced from the vaporizer to the reformer, wherein the reformer is configured to produce hydrogen from at least a portion of the hydrocarbon fuel using the steam as an oxidant.

According to the invention, the fuel-cell system further includes a second heater installed on a third air supply pipe for connecting the air supply and the reformer, wherein the second heater is configured for heating air flowing along the third air supply pipe, wherein when the temperature of the fuel-cell stack structure is below the first temperature, the controller is further configured to activate the second heater to heat the air and supply the heated air to the reformer via the third air supply pipe, thereby to raise up a temperature inside the reformer.

In one implementation, the fuel-cell system further includes a second heat exchanger configured to heat the hydrocarbon fuel supplied from an external fuel supply via heat exchange and to supply the heated fuel to the reformer, wherein the reformer is configured to supply the air supplied thereto via the third air supply pipe to the second heat exchanger.

In one implementation, each of the first heater and the second heater includes an electrical heating device or a gas burner.

According to the invention, the fuel-cell system further includes first to third valves respectively installed at the first to third air supply pipes, and to open and close the first to third air supply pipes, respectively, wherein the controller is further configured to control the first to third valves and the first and second heaters such that, when the temperature of the fuel-cell stack structure is lower than the first temperature, the air heated by the first and second heaters are respectively supplied to the fuel-cell stack structure and the reformer, when the temperature of the fuel-cell stack structure is in a range between the first temperature and the second high temperature, the air heated by the first heat exchanger is supplied to the fuel-cell stack structure, and when the temperature of the fuel-cell stack structure exceeds the second temperature, the first and second heaters stop, and the air supplied from the air supply is supplied to the fuel-cell stack structure and the reformer in an unheated state.

In one implementation, the fuel-cell system further includes: a bypass pipe connected to the air supply and extending to surround the fuel-cell stack structure; and a fourth valve installed at the bypass pipe to open and close the bypass pipe, wherein the controller is further configured to control the fourth valve to open the bypass pipe so that unheated air moves through the bypass pipe when the temperature of the fuel-cell stack structure is above the second temperature.

In one implementation, the bypass pipe includes: a first single pipe connected to the air supply; a plurality of second pipes branching from an end of the first single pipe and surrounding the fuel-cell stack structure; and a third single pipe to which the plurality of second pipes converge, wherein the third single pipe is directly connected to the second heat exchanger, or is connected to a pipe for connecting the first heat exchanger and the second heat exchanger with each other.

### TECHNICAL EFFECTS

According to the fuel-cell system according to the present disclosure, supplying air heated by the first and second heaters to the fuel-cell stack and the reformer during the start-up mode of the fuel-cell stack may allow the time duration from the start-up mode to the power generation mode to be reduced and allow the temperature distribution inside the fuel cell stack to be uniform, thereby improving the stability of the fuel cell stack.

Further, according to the fuel-cell system according to the present disclosure, in the abnormal overheated state of the fuel-cell stack or when the fuel-cell system stops, moving the cooling air via the bypass pipe or directly supplying the cooling air to the fuel-cell stack and reformer may allow the overall temperature of the fuel-cell stack to be lowered uniformly and quickly, thereby increasing the stability of the fuel-cell system.

### BRIEF DESCRIPTION OF THE DRAWINGS

FIG. 1 is a block diagram for describing a fuel-cell system according to an embodiment of the present disclosure.
FIG. 2 is a diagram for describing a bypass pipe shown in FIG. 1.

### DETAILED DESCRIPTIONS

For simplicity and clarity of illustration, elements in the figures are not necessarily drawn to scale. The same reference numbers in different figures denote the same or similar elements, and as such perform similar functionality. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Examples of various embodiments are illustrated and described further below. It will be understood that the description herein is not intended to limit the claims to the specific embodiments described.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

In addition, it will also be understood that when a first element or layer is referred to as being present "on" a second element or layer, the first element may be disposed directly on the second element or may be disposed indirectly on the second element with a third element or layer being disposed between the first and second elements or layers. It will be understood that when an element or layer is referred to as being "connected to", or "coupled to" another element or layer, it may be directly on, connected to, or coupled to the other element or layer, or one or more intervening elements or layers may be present. In addition, it will also be understood that when an element or layer is referred to as being "between" two elements or layers, it may be the only element or layer between the two elements or layers, or one or more intervening elements or layers may also be present.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, a stack structure for a fuel cell according to an embodiment according to the present disclosure will be described in detail with reference to the accompanying drawings.

As used herein, the term "start-up mode" of the high temperature operating fuel-cell stack may mean an operation mode for a time duration from an initial state of the fuel-cell stack to a time when the fuel-cell stack is heated to a temperature required for normal power generation.

As used herein, the term of "power generation mode" may mean an operation mode for a time duration in which the fuel-cell stack is generating power since the fuel-cell stack is heated to a temperature required for normal power generation.

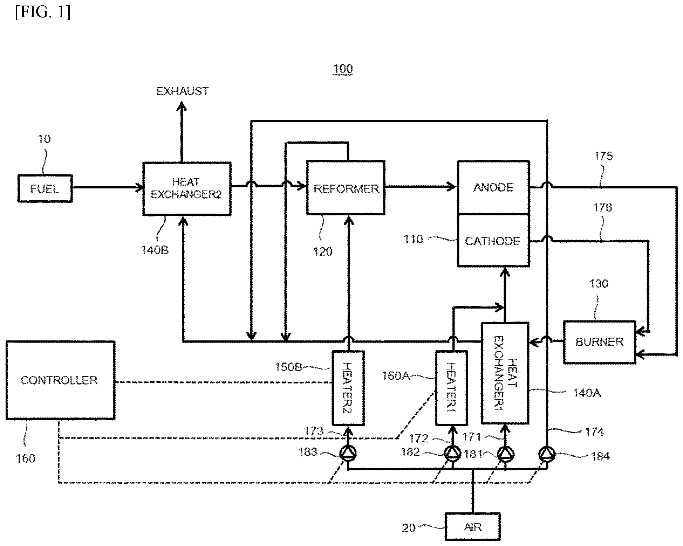

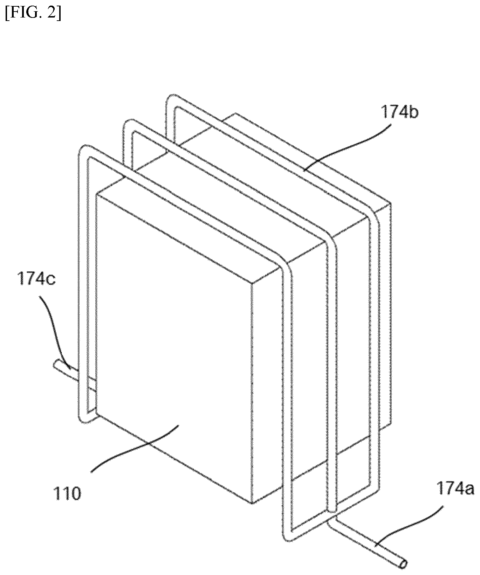

FIG. 1 is a block diagram for describing a fuel-cell system according to an embodiment according to the present disclosure. FIG. 2 is a diagram for describing a bypass pipe shown in FIG. 1.

Referring to FIG. 1 and FIG. 2, a fuel-cell system 100 according to one embodiment according to the present disclosure may include a fuel-cell stack structure 110, a reformer 120, a burner 130, a first heat exchanger 140A, a second heat exchanger 140B, a first heater 150A, a second heater 150B, and a controller 160.

The fuel-cell stack structure 110 may include one or more fuel-cell stacks operating at high temperatures. For example, the fuel-cell stack structure 110 may include one or more solid oxide fuel-cell (SOFC) stacks, molten carbonate fuel-cell (MCFC) stacks, and the like operating at temperatures of about 500 °C or higher. The fuel-cell stack structure 110 may generate electrical energy using oxygen in air and hydrogen in a reformed fuel gas. The oxygen-hydrogen reaction is exothermic, so that the fuel-cell stack structure 110 may release heat while generating electrical energy.

In one example, the fuel-cell stack structure 110 may include a stack of planar cells or a bundle of cylindrical or flat tubular cells.

The reformer 120 may convert at least a portion of the hydrocarbon fuel supplied from an external fuel supply 10 into hydrogen. The reformer 120 may include a steam reformer to convert the hydrocarbon fuel to hydrogen using steam as an oxidant, a partial oxidation reformer to convert the hydrocarbon fuel into hydrogen using oxygen as an oxidant, an auto-thermal reformer that converts the hydrocarbon fuel to hydrogen using both steam and oxygen as an oxidant, and a catalytic partial oxidation reformer for converting the hydrocarbon fuel to hydrogen via partial oxidation using a catalyst. Whereas the steam based reforming reaction in the steam reformer is an endothermic reaction, the partial oxidation based reforming reaction and the catalytic partial oxidation based reforming reaction in the partial oxidation reformer and catalytic partial oxidation reformer respectively are exothermic reactions. The auto-thermal reforming reaction in the auto-thermal reformer is a balanced reaction.

In one embodiment, the steam reformer may be used as the reformer 120 in order to use the heat generation of the high-temperature operating fuel-cell stack structure 110 and to improve the hydrocarbon reforming efficiency. In this case, the reformer 120 may convert at least a portion of the fuel to hydrogen by reacting steam generated by heating water supplied from an external water supply (not shown) and fuel supplied from the fuel supply 10 with each other. In one embodiment, a vaporizer may be disposed inside a second heat exchanger 140B to convert water into steam. Steam produced by the vaporizer and heated fuel from the fuel supply 10 may be mixed with each other to form a mixture which may be fed to the reformer 120.

The reformer 120 may reform the fuel supplied from the fuel supply 10 and supply the hydrogen to the fuel-cell stack structure 110 for a time duration from a beginning time of the start-up mode of the fuel-cell stack structure 110 to the power generation mode in which the temperature of the fuel-cell stack structure 110 reaches about 600 °C to 700 ° C at which auto-thermal power generation is realized.

In one embodiment, when the steam reformer is used as the reformer 120, the reformer 120 is supplied with air heated by the second heater 150B for a time duration from the start-up mode to a time when the temperature of the fuel-cell stack structure 110 reaches a predefined constant temperature. Thus, the internal temperature in the reformer 120 may be raised up via heat exchange between the reformer and the heated air, thereby improve the fuel reforming efficiency.

The burner 130 may burn unreacted discharged fuel in the fuel supplied to the fuel-cell stack structure 110 and unreacted discharged air in the air supplied to the fuel-cell stack structure 110 to generate hot combusted gas and then may supply the hot combusted gas to the first heat exchanger 140A. The burner 130 may employ any known combustion apparatus with limitation, and thus detailed description thereof will be omitted.

The first heat exchanger 140A heats the air provided from the external air supply 20 using the heat of the hot combusted gas provided from the burner 130. Then, the heated air may be provided to the fuel-cell stack structure 110. For example, the first heat exchanger 140A may heat the air via a heat exchange between the hot combusted gas provided from the burner 130 and the air provided from the air supply 20. To this end, the first heat exchanger 140 may be connected to a first air supply pipe 171 for supplying air from the air supply 20 to the fuel-cell stack.

In one embodiment, after the fuel-cell stack structure 110 is heated to a predefined constant temperature, the first heat exchanger 140A may supply air to the fuel-cell stack. For example, for a duration from a beginning time of the start-up mode of the fuel-cell stack structure 110 to a time when the temperature of the fuel-cell stack structure 110 reaches the predefined temperature, the air heated by the first heater 150A may be supplied to the fuel-cell stack structure 110. Since the temperature of the fuel-cell stack structure 110 has reached the predefined temperature, the air heated by the first heat exchanger 140A may be supplied to the fuel-cell stack structure 110.

In one example, in order to additionally use the thermal energy of the hot combusted gas heat exchanging with the air, the first heat exchanger 140A may supply the hot combusted gas to the second heat exchanger 140B.

The second heat exchanger 140B may heat the fuel supplied from the fuel supply 10 using the heat of the hot combusted gas provided from the first heat exchanger 140A and then supply the heated fuel to the reformer 120. For example, the second heat exchanger 140B may heat the fuel via heat exchange between the hot combusted gas provided from the first heat exchanger 140A and the fuel provided from the fuel supply 10. The combusted gas may be cooled after heating the fuel and then may be discharged to the outside.

In one example, when the reformer 120 is a steam reformer and an evaporator is installed inside the second heat exchanger 140B, the second heat exchanger 140B may convert the water supplied from the external water supply into steam via heat exchange with the hot combusted gas supplied from the first heat exchanger 140A and the water supplied from the external water supply and may feed the converted steam to the reformer 120 together with the heated fuel.

Each of the first and second heat exchangers 140A and 140B may employ any known heat exchanger without limitation, and thus a detailed description thereof will be omitted.

The first heater 150A is installed on a second air supply pipe 172 for connecting the air supply 20 and the fuel-cell stack structure 110 with each other. The second air supply pipe 172 may be directly connected to the fuel-cell stack structure 110, or may be connected to a portion of the first air supply pipe 171 between the first heat exchanger 140A and the fuel-cell stack structure 110. The first heater 150A may heat the air to be supplied to the fuel-cell stack structure 110 via the second air supply pipe 172 for a duration from the beginning time of the start-up mode of the fuel-cell stack structure 110 to a time when the temperature of the fuel-cell stack structure 110 reaches the predefined constant temperature.

The air heated by the first heat exchanger 140A and supplied to the fuel-cell stack structure 110 and the air heated by the first heater 150A and supplied to the fuel-cell stack structure 110 may react with hydrogen-containing reformed fuel supplied from the reformer 120 within the fuel-cell stack structure 110 to generate electrical energy.

The second heater 150B is installed on a third air supply pipe 173 for connecting the air supply 20 and the reformer 120 with each other. The second heater 150B may heat the air to be supplied to the reformer 120 via the third air supply pipe 173 for a duration from the beginning time of the start-up mode of the fuel-cell stack structure 110 to a time when the temperature of the fuel-cell stack structure 110 reaches the predefined constant temperature. The reformer 120 may use the thermal energy of the air heated by the second heater 150B to raise the internal temperature thereof, thereby improving the reforming efficiency for the duration from the beginning time of the start-up mode of the fuel-cell stack structure 110 to a time when the temperature of the fuel-cell stack structure 110 reaches the predefined constant temperature.

According to the invention, the first to third air supply pipes 171, 172, and 173 connected to the air supply 20 are provided with first to third valves 181, 182, and 183, respectively, to control the opening and closing thereof.

An operation of each of the first to third valves 181, 182, and 183 is controlled by a controller 160. For example, the second valve 182 and the third valve 183 may open the air supply pipe 172 and the third air supply pipe 173 respectively under the control operation of the controller 160 for the duration from the beginning time of the start-up mode of the fuel-cell stack structure 110 to a time when the temperature of the fuel-cell stack structure 110 reaches the predefined constant temperature. In this case, the air heated by the first heater 150A is supplied to the fuel-cell stack structure 110 via the second air supply pipe 172. The air heated by the second heater 150B is supplied to the reformer 120 via the third air supply pipe 173.

When the fuel-cell stack structure 110 is heated to a temperature above the predefined temperature, the second and third valves 182 and 183 may close the second and third air supply pipes 172 and 173 respectively under the control operation of the controller 160 while the first valve 181 may open the first air supply pipe 171 under the control operation of the controller 160. When the first air supply pipe 171 is opened, the air heated by the first heat exchanger 140A may be supplied to the fuel-cell stack structure 110 via the first air supply pipe 171.

In one example, when the fuel-cell stack structure 110 or the reformer 120 is heated to an abnormally high temperature and thus should be cooled or when the fuel-cell system 100 stops, the controller 160 blocks the first air supply pipe 171 using the first valve 181, and opens the second air supply pipe 172 using the second valve 182 to supply cooling air to the fuel-cell stack structure 110 while maintaining the first heater 150A at a stopped state. Further, the controller 160 opens the third air supply pipe 173 using the first valve 183 to supply cooling air to the reformer 120 while maintaining the second heater 150B at a stopped state.

When the hot air heated by the first and second heaters 150A and 150B may be supplied to the fuel-cell stack structure 110 and the reformer 120 for the duration from the beginning time of the start-up mode of the fuel-cell stack structure 110 to a time when the temperature of the fuel-cell stack structure 110 reaches the predefined constant temperature, the temperature of the entirety of the fuel-cell stack structure 110 may be raised uniformly and quickly. Thus, the time duration between the start-up mode of the fuel-cell stack structure 110 and the power generation mode thereof may be significantly reduced, as well as the thermal stability of the fuel-cell stack structure 110 may be improved.

In an embodiment, each of the first and second heaters 150A and 150B may employ an electrical heating device, a gas burner, or the like that may be easily turned on/off.

The controller 160 controls the operation of each of the first and second heaters 150A and 150B based on the temperature of the fuel-cell stack structure 110. In one embodiment, the controller 160 may use an electrical signal provided from a temperature sensor (not shown) disposed adj acent to the fuel-cell stack structure 110 to directly measure the temperature of the fuel-cell stack structure 110, or a temperature sensor (not shown) disposed on an air discharge pipe 175 to discharge the unreacted fuel from the fuel-cell stack structure 110 or a temperature sensor (not shown) disposed on an air discharge pipe 176 to discharge the unreacted air for indirectly measuring the temperature of the fuel-cell stack structure 110. When the controller 160 may determine based on the electrical signal that the temperature of the fuel-cell stack structure 110 is lower than the predefined temperature, for example, a temperature between about 300 to 700 °C, the controller may turn on the first and second heaters 150A and 150B. When the temperature of the fuel-cell stack structure 110 is above the predefined temperature, the controller 160 may turn off the first and second heaters 150A and 150B.

In one example, the fuel cell system 100 according to an embodiment of the present disclosure may further include a bypass pipe 174 and a fourth valve 184.

The bypass pipe 174 may be connected to the air supply 20 and may extend to surround the fuel-cell stack 100. In one embodiment, as shown in FIG. 2, the bypass pipe 174 may include a first single pipe 174a connected to the air supply 20, a plurality of second pipes 174b branching from an end of the first single pipe 174a, and surrounding the fuel-cell stack structure 110, and a third single pipe 174c to which the plurality of second pipes 174a converge, wherein the third single pipe 174c is connected to the second heat exchanger 140B. The third single pipe 174c may be directly connected to the second heat exchanger 140B, or may be connected to a pipe for connecting the first heat exchanger 140A and the second heat exchanger 140B with each other.

The fourth valve 184 may be installed on the bypass pipe 174, and may open or close the bypass pipe 174 under the control operation of the controller 160. For example, when the fuel-cell stack structure 110 is heated to an abnormally high temperature and needs to be cooled or when the fuel-cell system 100 stops, the controller 160 may open the bypass pipe 174 using the fourth valve 184. In this case, the temperature of the fuel-cell stack structure 110 may be lowered via heat exchange between the cooling air passing through the bypass pipe 174 and the fuel-cell stack structure 110. In one example, the fourth valve 184 may block the bypass pipe 174 except when the fuel-cell stack structure 110 is heated to an abnormally high temperature and needs to be cooled or when the fuel-cell system 100 stops.

According to the fuel-cell system according to the present disclosure, supplying air heated by the first and second heaters to the fuel-cell stack and the reformer during the start-up mode of the fuel-cell stack may allow the time duration from the start-up mode to the power generation mode to be reduced and allow the temperature distribution inside the fuel cell stack to be uniform, thereby improving the stability of the fuel cell stack.

Further, according to the fuel-cell system according to the present disclosure, in the abnormal overheated state of the fuel-cell stack or when the fuel-cell system stops, moving the cooling air via the bypass pipe or directly supplying the cooling air to the fuel-cell stack and reformer may allow the overall temperature of the fuel-cell stack to be lowered uniformly and quickly, thereby increasing the stability of the fuel-cell system.

## Claims

1. A fuel-cell system (100) including:
a fuel-cell stack structure (110) including one or more fuel-cell stacks; and
a reformer (120) for converting at least a portion of hydrocarbon fuel to hydrogen and supplying the hydrogen to the fuel-cell stack structure (110),
the fuel-cell system (100) further including:
a first heat exchanger (140A) coupled to a first air supply pipe (171) for connecting an external air supply (20) and the fuel-cell stack structure (110), wherein the first heat exchanger (140A) is configured for heating air supplied from the air supply (20) via heat exchange and for supplying the heated air to the fuel-cell stack structure (110);
a first heater (150A) installed on a second air supply pipe (172) for connecting the air supply (20) and the fuel-cell stack structure (110), wherein the first heater (150A) is configured for heating air to be supplied to the fuel-cell stack via the second air supply pipe; and
a controller (160) configured for:
when a temperature of the fuel-cell stack structure (110) is lower than a predefined first temperature, activating the first heater (150A) to heat air and supply the heated air the fuel-cell stack structure (110); and
when the temperature of the fuel-cell stack structure (110) is above the first temperature and below a predetermined second temperature higher than the first temperature, activating the first heat exchanger (140A) to heat air and supply the heated air the fuel-cell stack structure (110),
a second heater (150B) installed on a third air supply pipe (173) for connecting the air supply (20) and the reformer (120), wherein the second heater (150B) is configured for heating air flowing along the third air supply pipe (173),
wherein when the temperature of the fuel-cell stack structure (110) is below the first temperature, the controller (160) is further configured to activate the second heater (150B) to heat the air and supply the heated air to the reformer (120) via the third air supply pipe (173), thereby to raise up a temperature inside the reformer (120),
**characterized in that**
the fuel-cell system (100) further includes first to third valves (181, 182, and 183) respectively installed at the first to third air supply pipes (171, 172, and 173) to open and close the first to third air supply pipes, respectively,
wherein the controller (160) is further configured to control the first to third valves (181, 182, and 183) and the first and second heaters (150A and 150B) such that,
when the temperature of the fuel-cell stack structure (110) is lower than the first temperature, the air heated by the first and second heaters (150A and 150B) are respectively supplied to the fuel-cell stack structure 110 and the reformer (120),
when the temperature of the fuel-cell stack structure (110) is in a range between the first temperature and the second high temperature, the air heated by the first heat exchanger (140A) is supplied to the fuel-cell stack structure (110),
when the temperature of the fuel-cell stack structure (110) exceeds the second temperature, the first and second heaters (150A and 159B) stop, and the air supplied from the air supply (20) is supplied to the fuel-cell stack structure (110) and the reformer (120) in an unheated state.

2. The fuel-cell system (100) of claim 1, wherein the fuel-cell system (100) further includes a burner (130) for combusting unreacted fuel and air discharged from the fuel-cell stack structure (110),
wherein the first heat exchanger (140A) is configured to heat the air using hot combusted gas supplied from the burner (130).

3. The fuel-cell system (100) of claim 2, wherein the fuel-cell system (100) further includes a second heat exchanger (140B) configured to receive the hot combusted gas from the first heat exchanger (140A) and to heat the hydrocarbon fuel supplied from an external fuel supply (10) via heat exchange with the hot combusted gas and to supply the heated fuel to the reformer (120).

4. The fuel-cell system (100) of claim 3, wherein the second heat exchanger (140B) includes a vaporizer for converting water into steam via heat exchange with the combusted gas,
wherein the second heat exchanger (140B) is configured for supplying the heated hydrocarbon fuel and the steam produced from the vaporizer to the reformer (120),
wherein the reformer (120) is configured to produce hydrogen from at least a portion of the hydrocarbon fuel using the steam as an oxidant.

5. The fuel-cell system (100) of claim 1, wherein the fuel-cell system (100) further includes a second heat exchanger (140B) configured to heat the hydrocarbon fuel supplied from an external fuel supply (10) via heat exchange and to supply the heated fuel to the reformer (120),
wherein the reformer (120) is configured to supply the air supplied thereto via the third air supply pipe (173) to the second heat exchanger (140B).

6. The fuel-cell system (100) of claim 1, wherein each of the first heater (150A) and the second heater (150B) includes an electrical heating device or a gas burner.

7. The fuel-cell system (100) of claim 1, wherein the fuel-cell system (100) further includes:
a bypass pipe (174) connected to the air supply (20) and extending to surround the fuel-cell stack structure (110); and
a fourth valve (184) installed at the bypass pipe (174) to open and close the bypass pipe (174),
wherein the controller (160) is further configured to control the fourth valve (184) to open the bypass pipe (174) so that unheated air moves through the bypass pipe when the temperature of the fuel-cell stack structure (110) is above the second temperature.

8. The fuel-cell system (100) of claim 7
wherein the bypass pipe (174) includes:
a first single pipe (174a) connected to the air supply (20);
a plurality of second pipes (174b) branching from an end of the first single pipe (174a), and surrounding the fuel-cell stack structure (110); and
a third single pipe (174c) to which the plurality of second pipes (174a) converge,
wherein the third single pipe (174c) is directly connected to the second heat exchanger (140B), or is connected to a pipe for connecting the first heat exchanger (140A) and the second heat exchanger (140B) with each other.

## Patentansprüche

1. Brennstoffzellensystem (100), das Folgendes einschließt:
eine Brennstoffzellenstapelstruktur (110), die einen oder mehrere Brennstoffzellenstapel einschließt; und
einen Reformer (120) zum Umwandeln zumindest eines Teils des Kohlenwasserstoffbrennstoffs in Wasserstoff und zum Zuführen des Wasserstoffs zur Brennstoffzellenstapelstruktur (110),
wobei das Brennstoffzellensystem (100) weiter einschließt:
einen ersten Wärmetauscher (140A), der mit einer ersten Luftzufuhrleitung (171) gekoppelt ist, um eine externe Luftzufuhr (20) und die Brennstoffzellenstapelstruktur (110) zu verbinden, wobei der erste Wärmetauscher (140A) zum Erhitzen von von der Luftzufuhr (20) zugeführter Luft über Wärmeaustausch und zum Zuführen der erhitzten Luft zur Brennstoffzellenstapelstruktur (110) konfiguriert ist;
ein erstes Heizgerät (150A), das an einer zweiten Luftzufuhrleitung (172) zum Verbinden der Luftzufuhr (20) und der Brennstoffzellenstapelstruktur (110) installiert ist, wobei das erste Heizgerät (150A) zum Erhitzen von Luft konfiguriert ist, die dem Brennstoffzellenstapel über die zweite Luftzufuhrleitung zugeführt werden soll; und
eine Steuereinheit (160), die zu Folgendem konfiguriert ist:
wenn eine Temperatur der Brennstoffzellenstapelstruktur (110) niedriger ist als eine vordefinierte erste Temperatur, Aktivieren des ersten Heizgeräts (150A), um Luft zu erhitzen und die erhitzte Luft der Brennstoffzellenstapelstruktur (110) zuzuführen; und
wenn die Temperatur der Brennstoffzellenstapelstruktur (110) über der ersten Temperatur und unter einer vorbestimmten zweiten Temperatur liegt, die höher als die erste Temperatur ist, Aktivieren des ersten Wärmetauschers (140A), um Luft zu erhitzen und die erhitzte Luft der Brennstoffzellenstapelstruktur (110) zuzuführen,
ein zweites Heizgerät (150B), das an einer dritten Luftzufuhrleitung (173) zum Verbinden der Luftzufuhr (20) und des Reformers (120) installiert ist, wobei das zweite Heizgerät (150B) zum Erhitzen von Luft konfiguriert ist, die entlang der dritten Luftzufuhrleitung (173) strömt,
wobei, wenn die Temperatur der Brennstoffzellenstapelstruktur (110) unter der ersten Temperatur liegt, die Steuereinheit (160) weiter dazu konfiguriert ist, das zweite Heizgerät (150B) zu aktivieren, um die Luft zu erhitzen und die erhitzte Luft über die dritte Luftzufuhrleitung (173) dem Reformer (120) zuzuführen, um dadurch eine Temperatur im Inneren des Reformers (120) zu erhöhen,
**dadurch gekennzeichnet, dass**
das Brennstoffzellensystem (100) weiter ein erstes bis drittes Ventil (181, 182 und 183) einschließt, die jeweils an der ersten bis dritten Luftzufuhrleitung (171, 172 und 173) installiert sind, um die erste bis dritte Luftzufuhrleitung jeweils zu öffnen und zu schließen,
wobei die Steuereinheit (160) weiter dazu konfiguriert ist, das erste bis dritte Ventil (181, 182 und 183) und das erste und zweite Heizgerät (150A und 150B) so zu steuern, dass,
wenn die Temperatur der Brennstoffzellenstapelstruktur (110) niedriger als die erste Temperatur ist, die durch das erste und zweite Heizgerät (150A und 150B) erhitzte Luft jeweils der Brennstoffzellenstapelstruktur (110) und dem Reformer (120) zugeführt wird,
wenn die Temperatur der Brennstoffzellenstapelstruktur (110) in einem Bereich zwischen der ersten Temperatur und der zweiten, hohen Temperatur liegt, die durch den ersten Wärmetauscher (140A) erhitzte Luft der Brennstoffzellenstapelstruktur (110) zugeführt wird,
wenn die Temperatur der Brennstoffzellenstapelstruktur (110) die zweite Temperatur überschreitet, das erste und zweite Heizgerät (150A und 150B) stoppen und die von der Luftzufuhr (20) zugeführte Luft der Brennstoffzellenstapelstruktur (110) und dem Reformer (120) in einem nicht erhitzten Zustand zugeführt wird.

2. Brennstoffzellensystem (100) nach Anspruch 1, wobei das Brennstoffzellensystem (100) weiter einen Brenner (130) zum Verbrennen von nicht umgesetztem Brennstoff und Luft, die aus der Brennstoffzellenstapelstruktur (110) ausgestoßen wird, einschließt,
wobei der erste Wärmetauscher (140A) dazu konfiguriert ist, die Luft unter Verwendung von heißem Verbrennungsgas, das vom Brenner (130) zugeführt wird, zu erhitzen.

3. Brennstoffzellensystem (100) nach Anspruch 2, wobei das Brennstoffzellensystem (100) weiter einen zweiten Wärmetauscher (140B) einschließt, der dazu konfiguriert ist, das heiße Verbrennungsgas vom ersten Wärmetauscher (140A) aufzunehmen und den von einer externen Brennstoffzufuhr (10) zugeführten Kohlenwasserstoffbrennstoff durch Wärmeaustausch mit dem heißen Verbrennungsgas zu erhitzen und den erhitzten Brennstoff dem Reformer (120) zuzuführen.

4. Brennstoffzellensystem (100) nach Anspruch 3, wobei der zweite Wärmetauscher (140B) einen Verdampfer zum Umwandeln von Wasser in Dampf durch Wärmeaustausch mit dem Verbrennungsgas einschließt,
wobei der zweite Wärmetauscher (140B) dazu konfiguriert ist, den erhitzten Kohlenwasserstoffbrennstoff und den vom Verdampfer erzeugten Dampf dem Reformer (120) zuzuführen,
wobei der Reformer (120) dazu konfiguriert ist, unter Verwendung des Dampfs als Oxidationsmittel aus zumindest einem Teil des Kohlenwasserstoffbrennstoffs Wasserstoff zu erzeugen.

5. Brennstoffzellensystem (100) nach Anspruch 1, wobei das Brennstoffzellensystem (100) weiter einen zweiten Wärmetauscher (140B) einschließt, der dazu konfiguriert ist, den von einer externen Brennstoffzufuhr (10) zugeführten Kohlenwasserstoffbrennstoff durch Wärmeaustausch zu erhitzen und den erhitzten Brennstoff dem Reformer (120) zuzuführen,
wobei der Reformer (120) dazu konfiguriert ist, die ihm zugeführte Luft über die dritte Luftzufuhrleitung (173) dem zweiten Wärmetauscher (140B) zuzuführen.

6. Brennstoffzellensystem (100) nach Anspruch 1, wobei sowohl das erste Heizgerät (150A) als auch das zweite Heizgerät (150B) eine elektrische Heizvorrichtung oder einen Gasbrenner einschließt.

7. Brennstoffzellensystem (100) nach Anspruch 1, wobei das Brennstoffzellensystem (100) weiter einschließt:
eine Bypassleitung (174), die mit der Luftzufuhr (20) verbunden ist und sich so erstreckt, dass sie die Brennstoffzellenstapelstruktur (110) umgibt; und
ein viertes Ventil (184), das an der Bypassleitung (174) installiert ist, um die Bypassleitung (174) zu öffnen und zu schließen,
wobei die Steuereinheit (160) weiter dazu konfiguriert ist, das vierte Ventil (184) zu steuern, um die Bypassleitung (174) zu öffnen, so dass sich nicht erhitzte Luft durch die Bypassleitung bewegt, wenn die Temperatur der Brennstoffzellenstapelstruktur (110) über der zweiten Temperatur liegt.

8. Brennstoffzellensystem (100) nach Anspruch 7, wobei die Bypassleitung (174) Folgendes einschließt:
eine erste Einzelleitung (174a), die mit der Luftzufuhr (20) verbunden ist;
eine Vielzahl von zweiten Leitungen (174b), die von einem Ende der ersten Einzelleitung (174a) abzweigen und die Brennstoffzellenstapelstruktur (110) umgeben; und
eine dritte Einzelleitung (174c), in die die Vielzahl zweiter Leitungen (174a) zusammenläuft,
wobei die dritte Einzelleitung (174c) direkt mit dem zweiten Wärmetauscher (140B) verbunden ist oder mit einer Leitung zum Verbinden des ersten Wärmetauschers (140A) und des zweiten Wärmetauschers (140B) miteinander verbunden ist.

## Revendications

1. Système (100) de pile à combustible incluant :
une structure (110) d'empilement de piles à combustible incluant un ou plusieurs empilements de piles à combustible ; et
un réformeur (120) pour convertir au moins une partie de combustible hydrocarboné en hydrogène et apporter l'hydrogène à la structure (110) d'empilement de piles à combustible,
le système (100) de pile à combustible incluant en outre :
un premier échangeur de chaleur (140A) couplé à un premier tuyau d'alimentation en air (171) pour raccorder une alimentation en air externe (20) et la structure (110) d'empilement de piles à combustible, dans lequel le premier échangeur de chaleur (140A) est configuré pour chauffer de l'air apporté par l'alimentation en air (20) via un échange de chaleur et pour apporter l'air chauffé à la structure (110) d'empilement de piles à combustible ;
un premier élément chauffant (150A) installé sur un deuxième tuyau d'alimentation en air (172) pour raccorder l'alimentation en air (20) et la structure (110) d'empilement de piles à combustible, dans lequel le premier élément chauffant (150A) est configuré pour chauffer de l'air à apporter à l'empilement de piles à combustible via le deuxième tuyau d'alimentation en air ; et
un dispositif de commande (160) configuré pour :
lorsqu'une température de la structure (110) d'empilement de piles à combustible est inférieure à une première température prédéfinie, activer le premier élément chauffant (150A) pour chauffer de l'air et apporter l'air chauffé à la structure (110) d'empilement de piles à combustible ; et
lorsque la température de la structure (110) d'empilement de piles à combustible est supérieure à la première température et inférieure à une deuxième température prédéterminée supérieure à la première température, activer le premier échangeur de chaleur (140A) pour chauffer de l'air et apporter l'air chauffé à la structure (110) d'empilement de piles à combustible,
un deuxième élément chauffant (150B) installé sur un troisième tuyau d'alimentation en air (173) pour raccorder l'alimentation en air (20) et le réformeur (120), dans lequel le deuxième élément chauffant (150B) est configuré pour chauffer l'air circulant le long du troisième tuyau d'alimentation en air (173),
dans lequel lorsque la température de la structure (110) d'empilement de piles à combustible est inférieure à la première température, le dispositif de commande (160) est en outre configuré pour activer le deuxième élément chauffant (150B) afin de chauffer de l'air et d'apporter l'air chauffé au réformeur (120) via le troisième tuyau d'alimentation en air (173) pour augmenter ainsi une température à l'intérieur du réformeur (120),
**caractérisé en ce que**
le système (100) de pile à combustible inclut en outre des première à troisième vannes (181, 182 et 183) respectivement installées au niveau des premier à troisième tuyaux d'alimentation en air (171, 172 et 173) pour ouvrir et fermer les premier à troisième tuyaux d'alimentation en air, respectivement,
dans lequel le dispositif de commande (160) est en outre configuré pour commander les première à troisième vannes (181, 182 et 183) et les premier et deuxième éléments chauffants (150A et 150B) de telle sorte que,
lorsque la température de la structure (110) d'empilement de piles à combustible est inférieure à la première température, l'air chauffé par les premier et deuxième éléments chauffants (150A et 150B) soit respectivement apporté à la structure (110) d'empilement de piles à combustible et au réformeur (120),
lorsque la température de la structure (110) d'empilement de piles à combustible se situe dans une plage comprise entre la première température et la deuxième température élevée, l'air chauffé par le premier échangeur de chaleur (140A) est apporté à la structure (110) d'empilement de piles à combustible,
lorsque la température de la structure (110) d'empilement de piles à combustible dépasse la deuxième température, les premier et deuxième éléments chauffants (150A et 159B) s'arrêtent, et l'air apporté par l'alimentation en air (20) est apporté à la structure (110) d'empilement de piles à combustible et au réformeur (120) dans un état non chauffé.

2. Système (100) de pile à combustible selon la revendication 1, dans lequel le système (100) de pile à combustible inclut en outre un brûleur (130) pour brûler le combustible n'ayant pas réagi et l'air évacué de la structure (110) d'empilement de piles à combustible,
dans lequel le premier échangeur de chaleur (140A) est configuré pour chauffer l'air à l'aide du gaz brûlé chaud apporté par le brûleur (130).

3. Système (100) de pile à combustible selon la revendication 2, dans lequel le système (100) de pile à combustible inclut en outre un deuxième échangeur de chaleur (140B) configuré pour recevoir le gaz brûlé chaud provenant du premier échangeur de chaleur (140A) et pour chauffer le combustible hydrocarboné apporté depuis une alimentation en combustible externe (10) via un échange de chaleur avec le gaz brûlé chaud et pour apporter le combustible chauffé au réformeur (120).

4. Système (100) de pile à combustible selon la revendication 3, dans lequel le deuxième échangeur de chaleur (140B) inclut un vaporisateur pour convertir l'eau en vapeur via un échange de chaleur avec le gaz brûlé,
dans lequel le deuxième échangeur de chaleur (140B) est configuré pour apporter le combustible hydrocarboné chauffé et la vapeur produite par le vaporisateur au réformeur (120),
dans lequel le réformeur (120) est configuré pour produire de l'hydrogène à partir d'au moins une partie du combustible hydrocarboné en utilisant la vapeur comme oxydant.

5. Système (100) de pile à combustible selon la revendication 1, dans lequel le système (100) de pile à combustible inclut en outre un deuxième échangeur de chaleur (140B) configuré pour chauffer le combustible hydrocarboné apporté depuis une alimentation en combustible externe (10) via un échange de chaleur et pour apporter le combustible chauffé au réformeur (120),
dans lequel le réformeur (120) est configuré pour apporter l'air qui lui est apporté via le troisième tuyau d'alimentation en air (173) au deuxième échangeur de chaleur (140B).

6. Système (100) de pile à combustible selon la revendication 1, dans lequel chacun parmi le premier élément chauffant (150A) et le deuxième élément chauffant (150B) inclut un dispositif de chauffage électrique ou un brûleur à gaz.

7. Système (100) de pile à combustible selon la revendication 1, dans lequel le système (100) de pile à combustible inclut en outre :
un tuyau de dérivation (174) raccordé à l'alimentation en air (20) et s'étendant pour entourer la structure (110) d'empilement de piles à combustible ; et
une quatrième vanne (184) installée au niveau du tuyau de dérivation (174) pour ouvrir et fermer le tuyau de dérivation (174),
dans lequel le dispositif de commande (160) est en outre configuré pour commander la quatrième vanne (184) afin d'ouvrir le tuyau de dérivation (174) de sorte que de l'air non chauffé se déplace à travers le tuyau de dérivation lorsque la température de la structure (110) d'empilement de piles à combustible est supérieure à la deuxième température.

8. Système (100) de pile à combustible selon la revendication 7, dans lequel le tuyau de dérivation (174) inclut :
un premier tuyau unique (174a) raccordé à l'alimentation en air (20) ;
une pluralité de deuxièmes tuyaux (174b) bifurquant depuis une extrémité du premier tuyau unique (174a) et entourant la structure (110) d'empilement de piles à combustible ; et
un troisième tuyau unique (174c) vers lequel convergent la pluralité de deuxièmes tuyaux (174a),
dans lequel le troisième tuyau unique (174c) est directement raccordé au deuxième échangeur de chaleur (140B), ou est raccordé à un tuyau pour raccorder le premier échangeur de chaleur (140A) et le deuxième échangeur de chaleur (140B) l'un à l'autre.
